# EUROPEAN PATENT APPLICATION

(11) **EP 3 492 435 A1**
(43) Date of publication of application: **05.06.2019**
(21) Application number: 17001975.6
(22) Date of filing: 04.12.2017
(51) Int. Cl.: C02F 11/04, C02F 3/28, C02F 3/12, C02F 1/52, C02F 1/72, C02F 103/26, C02F 103/32

(54) **METHOD FOR VINASSE WASTE TREATMENT**

(71) Applicant: Dergo Spólka z ograniczona odpowiedzialnoscia, 92-318 Lodz (PL)
(72) Inventor: STOCHMAL, Agnieszka, 83-112 Lubiszewo (PL); DZIUGAN, Piotr, 95-100 Zgierz (PL)

(57) **Abstract**

Method for vinasse waste treatment, comprasing a multi-stage process of microbiological and physico-chemical treatment, characterized in that, raw material in the form of vinasse waste with pH form 3,8 to 5,0 separated from a slurry in filtration and/or spinning process is treated by anaerobic methods at a temperature from 25 to 38°C in acidogenesis tank for 2 to 12 hours and main reactor for 14 to 24 hours to obtain a composition of methane and carbon dioxide, wherefore said vinasse waste with pH from 6,0 to 7,5 is aerating by micro-bubble method for 60 to 120 minutes at a temperature 30 to 38 ° C to remove methane and precipitation the sludge while remove excess of ammonia at the same time by adding orthophosphoric acid and magnesium oxide in the molar proposal NH₄: Mg:PO₄ 1:1:1, where said sludge is gravity separated during 4 to 6 hours at a temperature 30 to 38 ° C, then conducts the coagulation process using solution of iron chloride and iron sulphate from 0,5 do 2,0 kg/m³ waste with intensive air mixing for 30 to 60 minutes and mechanical mixing for 120 minutes alternately with separation of sludge in secondary settling tank, wherefore clear sludge is treated by microbiological activated-sludge process and oxidized by deep chemical method using hydrogen peroxide from 0,5 to 2,0 kg/m³ waste for 24 to 48 hours at a temperature from 30 to 38 ° C to remove the biodegradation resistance residuals.

## Description

The subject of the invention is a method for vinasse waste treatment.

Document US5328707 disclose recovery of waste liquid from production of rice liquor. A process for recovering waste liquid from the distillation of fermented rice liquor. After filtration of the waste liquid, the residue can be recovered as dry feed, and the filtrate which contains about 4-5% crude protein, 1% starch and 92 wt. % water is first concentrated to lower the water content to about 70-80 wt. %. The filtrate is then dried with a spray dryer to produce nutritious dry feed while a suitable chelating agent such as magnesium hydroxide is used to prevent the clinging of the product on the wall of the dryer.

Document GB1470331 disclose process for drying residual liquor . In a process for treating residual liquor obtained as a result of distilling a comminuted fermented mash (e.g. of potatoes or grain) in plant , the liquor S is passed through centrifuge where a solids fraction F is separated from a liquid fraction P, the liquid fraction P is passed via settlers, where fine solids settle out, to multistage falling film vacuum evaporator A where it is concentrated the resultant concentrate K is mixed with solids fraction F in a cross-blade mixer, the mixture is dried in pipe by hot combustion gas and the mixture is cooled on conveyor. Dried mixture may also be returned to mixer.

Document PL 208046 disclose utilization method for slops, especially rye wort or vinasse. Method of utilization of the slops, especially rye wort or vinasse, consisting in the separation of this decoction into liquid fraction and solid fraction in the sedimentation process in the presence of accelerating substances, in a strongly aerated environment and in the drying process in the countercurrent spray dryer.

Document RU2220195 disclose method for treatment of liquid waste in alcohol production. Invention relates to processing waste in alcohol production (vinasse) and can be used as fodder product for animals, poultries and others. Method involves removal of suspended colloidal and dissolved organic and mineral impurities by physical-chemical methods and their precipitation and coagulation that is carried out addition of clay yrelite in the amount 500-6 000 mg/l, reagent of water-soluble polyelectrolyte of cation sort VPK-402 in the amount 1-6 mg/l and slaked lime in the amount 100-300 mg/l. Then prepared precipitate is thickened and used as a fodder product and cleared water is dropped into sewer system or fed to additional treatment. Method provides reducing cost, to simplify technological process of vinasse treatment and to prepare fodder products.

The substance of the invention is a method for vinasse waste treatment, comprasing a multi-stage process of microbiological and physico-chemical treatment, characterized in that, raw material in the form of vinasse waste with pH form 3,8 to 5,0 separated from a slurry in filtration and/or spinning process is treated by anaerobic methods at a temperature from 25 to 38°C in acidogenesis tank for 2 to 12 hours and main reactor for 14 to 24 hours to obtain a composition of methane and carbon dioxide of a substantial part of the organic charge contained in the raw material. Effluent after anaerobic treatment with pH from 6,0 to 7,5 is aerating by micro-bubble method for 60 to 120 minutes at a temperature 30 to 38 ° C to remove methane and precipitation the sludge while remove excess of ammonia at the same time by adding orthophosphoric acid and magnesium oxide in the molar proposal NH4: Mg:PO4 1:1:1. The sludge is gravity separated during 4 to 6 hours at a temperature 30 to 38 ° C, then conducts the coagulation process using solution of iron chloride and iron sulphate from 0,5 do 2,0 kg/m³ waste with intensive air mixing for 30 to 60 minutes and mechanical mixing for 120 minutes alternately with separation of sludge in secondary settling tank. Clear sludge is treated by microbiological activated-sludge process. The following denitrification (DN), nitrification (N) and regeneration (R) cycles are performed in the order DN / N / DN / N / R or DN / N / R. Then sludge is oxidized by deep chemical method using hydrogen peroxide from 0,5 to 2,0 kg/m³ waste for 24 to 48 hours at a temperature from 30 to 38 ° C to remove the biodegradation resistance residuals.

Favorably oxidation by deep chemical method using ozone from 0,5 to 2,0 kg/m³ waste for 24 to 48 hours at a temperature from 30 to 38 ° C.

The method according to the present invention allows to cleaned up the vinasse waste to the level of deposition into the environment through a multi-stage process of microbiological and physico-chemical treatment. As a result, the residual residue in the form of vinasse waste can be partially recycled to primary production and partly discharged into the environment as purified water.

### Embodiment Example I

Method for vinasse waste treatment, comprasing a multi-stage process of microbiological and physico-chemical treatment. Raw material in the form of vinasse waste with pH 3,8 separated from a slurry in filtration and/or spinning process is treated by anaerobic methods at a temperature 25 °C in acidogenesis tank for 2 hours and main reactor for 14 hours to obtain a composition of methane and carbon dioxide of a substantial part of the organic charge contained in the raw material. Effluent after anaerobic treatment with pH 6,0 is aerating by micro-bubble method for 60 minutes at a temperature 30 ° C to remove methane and precipitation the colored sludge while remove excess of ammonia at the same time by adding orthophosphoric acid and magnesium oxide in the molar proposal NH4: Mg:PO4 1:1:1. Ammonia is combined to complex salt-struvite. Then the sludge is gravity separated during 4 hours at a temperature 30 ° C. Next conducts the coagulation process using solution of iron chloride and iron sulphate 0,5 kg/m³ waste with intensive air mixing for 30 minutes and mechanical mixing for 120 minutes alternately with separation of sludge in secondary settling tank. Clear sludge is treated by microbiological activated-sludge process. The following denitrification (DN), nitrification (N) and regeneration (R) cycles are performed in the order DN / N / DN / N / R or DN / N / R. Then sludge is oxidized by deep chemical method using hydrogen peroxide 0,5 kg/m³ waste for 24 hours at a temperature 30 ° C to remove the biodegradation resistance residuals in the form of color components that surpassing the permissible level of value of the COD (Chemical Oxygen Demand) and color requirements.

### Embodiment Example II

Method for vinasse waste treatment, comprasing a multi-stage process of microbiological and physico-chemical treatment. Raw material in the form of vinasse waste with pH 5,0 separated from a slurry in filtration and/or spinning process is treated by anaerobic methods at a temperature 38°C in acidogenesis tank for 12 hours and main reactor for 24 hours to obtain a composition of methane and carbon dioxide of a substantial part of the organic charge contained in the raw material. Effluent after anaerobic treatment with pH 7,5 is aerating by micro-bubble method for 120 minutes at a temperature 38 ° C to remove methane and precipitation the colored sludge while remove excess of ammonia at the same time by adding orthophosphoric acid and magnesium oxide in the molar proposal NH4: Mg:PO4 1:1:1. Ammonia is combined to complex salt-struvite. Then the sludge is gravity separated during 6 hours at a temperature 38 ° C. Next conducts the coagulation process using solution of iron chloride and iron sulphate 2,0 kg/m³ waste with intensive air mixing for 60 minutes and mechanical mixing for 120 minutes alternately with separation of sludge in secondary settling tank. Clear sludge is treated by microbiological activated-sludge process. The following denitrification (DN), nitrification (N) and regeneration (R) cycles are performed in the order DN / N / DN / N / R or DN / N / R. Then sludge is oxidized by deep chemical method using hydrogen peroxide 2,0 kg/m³ waste for 48 hours at a temperature 38 ° C to remove the biodegradation resistance residuals in the form of color components that surpassing the permissible level of value of the COD (Chemical Oxygen Demand) and color requirements.

### Embodiment Example III

Method for vinasse waste treatment, comprasing a multi-stage process of microbiological and physico-chemical treatment. Raw material in the form of vinasse waste with pH 4,5 separated from a slurry in filtration and/or spinning process is treated by anaerobic methods at a temperature 34 °C in acidogenesis tank for 8 hours and main reactor for 18 hours to obtain a composition of methane and carbon dioxide of a substantial part of the organic charge contained in the raw material. Effluent after anaerobic treatment with pH 7,0 is aerating by micro-bubble method for 80 minutes at a temperature 34 ° C to remove methane and precipitation the colored sludge while remove excess of ammonia at the same time by adding orthophosphoric acid and magnesium oxide in the molar proposal NH4: Mg:PO4 1:1:1. Ammonia is combined to complex salt-struvite. Then the sludge is gravity separated during 6 hours at a temperature 38° C. Next conducts the coagulation process using solution of iron chloride and iron sulphate 1,5 kg/m³ waste with intensive air mixing for 20 minutes and mechanical mixing for 120 minutes alternately with separation of sludge in secondary settling tank. Clear sludge is treated by microbiological activated-sludge process and oxidized by deep chemical method using ozone 0,5 kg/m³ waste for 24 hours at a temperature 30° C.

### Embodiment Example IV

Method for vinasse waste treatment, comprasing a multi-stage process of microbiological and physico-chemical treatment. Raw material in the form of vinasse waste with pH 4,5 separated from a slurry in filtration and/or spinning process is treated by anaerobic methods at a temperature 34 °C in acidogenesis tank for 8 hours and main reactor for 18 hours to obtain a composition of methane and carbon dioxide of a substantial part of the organic charge contained in the raw material. Effluent after anaerobic treatment with pH 7,0 is aerating by micro-bubble method for 80 minutes at a temperature 34 ° C to remove methane and precipitation the colored sludge while remove excess of ammonia at the same time by adding orthophosphoric acid and magnesium oxide in the molar proposal NH4: Mg:PO4 1:1:1. Ammonia is combined to complex salt-struvite. Then the sludge is gravity separated during 6 hours at a temperature 38° C. Next conducts the coagulation process using solution of iron chloride and iron sulphate 1,5 kg/m³ waste with intensive air mixing for 20 minutes and mechanical mixing for 120 minutes alternately with separation of sludge in secondary settling tank. Clear sludge is treated by microbiological activated-sludge process and oxidized by deep chemical method using ozone 2,0 kg/m³ waste for 48 hours at a temperature 38° C.

## Claims

1. Method for vinasse waste treatment, comprasing a multi-stage process of microbiological and physico-chemical treatment, **characterized in that**, raw material in the form of vinasse waste with pH form 3,8 to 5,0 separated from a slurry in filtration and/or spinning process is treated by anaerobic methods at a temperature from 25 to 38°C in acidogenesis tank for 2 to 12 hours and main reactor for 14 to 24 hours to obtain a composition of methane and carbon dioxide, wherefore effluent with pH from 6,0 to 7,5 is aerating by micro-bubble method for 60 to 120 minutes at a temperature 30 to 38 ° C to remove methane and precipitation the sludge while remove excess of ammonia at the same time by adding orthophosphoric acid and magnesium oxide in the molar proposal NH₄: Mg:PO₄ 1:1:1, where said sludge is gravity separated during 4 to 6 hours at a temperature 30 to 38 ° C, then conducts the coagulation process using solution of iron chloride and iron sulphate from 0,5 do 2,0 kg/m³ waste with intensive air mixing for 30 to 60 minutes and mechanical mixing for 120 minutes alternately with separation of sludge in secondary settling tank, wherefore clear sludge is treated by microbiological activated-sludge process and oxidized by deep chemical method using hydrogen peroxide from 0,5 to 2,0 kg/m³ waste for 24 to 48 hours at a temperature from 30 to 38 ° C to remove the biodegradation resistance residuals.

2. Method according to claim 1, **characterized in that** oxidation by deep chemical method using ozone from 0,5 to 2,0 kg/m³ waste for 24 to 48 hours at a temperature from 30 to 38 ° C.
